# EUROPEAN PATENT SPECIFICATION

(11) **EP 2 133 663 B1**
(45) Date of publication and mention of the grant of the patent: **15.02.2012**
(21) Application number: 08425405.1
(22) Date of filing: 09.06.2008
(51) Int. Cl.: G01C 21/20, A61H 3/06, G01S 5/14, G08G 1/00

(54) **Process for aiding navigation, in particular pedestrian navigation, and respective system and computer program product**
Navigationsverfahren, insbesondere für Fussgänger, und entsprechendes System und Computerprogrammprodukt.
Procédé d'aide à la navigation, en particulier la navigation pédèstre, et système et produit de programme informatique correspondant.

(43) Date of publication of application: 16.12.2009
(73) Proprietor: Il Village S.p.A., 10153 Torino (IT)
(72) Inventor: De Paoli, Andrea c/o Village S.p.A, 10153 Torino (IT)
(74) Representative: Gallarotti, Franco

(56) References cited:
- EP-A- 1 795 866
- US-A- 4 570 227
- US-A- 5 470 233
- US-A1- 2003 179 133

## Description

The present invention relates to a process for aiding navigation, in particular pedestrian navigation, in particular for visually impaired or blind users, which includes the operation of detecting a user position at a user-portable processing device by means of satellite positional locating systems, of transferring said user position to a guide information processing module, of transferring in response from said guide information processing module to said portable processing device at least one guide information obtained based on said user position.

The invention will be described with particular reference to use in mobile terminals suitable for telephones equipped with GPS (Global Positioning System) positioning means, but in any case, it is clear that the applicability of the invention extends to all mobile terminals associable to a user under the conditions described and provided with positioning systems, allowing a user in contact with or in proximity to the earth's surface to know his own geographic position.

Furthermore, it is clear that, although the invention is mainly addressed to visually impaired or blind users, users with normal visual capacity can also benefit from it.

Multiple pedestrian navigation aid systems are known in the art, conceived in particular to allow blind and visually impaired users to move in urban environments by obtaining guide information in such environments.

For example, a navigation system for blind persons based on the positional location system known as EGNOS (European Geostationary Navigation Overlay System) of the European Space Agency (URL "http: //www.esa.int/esaCP/SEM4MWK8IOE_index_0.html") is known. Such system foresees the integration in a palm computer susceptible of executing telephone functions also a receiver exploiting such perfected EGNOS positioning program. The EGNOS receivers have a positioning accuracy of less than two metres, with respect to 15 metres for conventional GPS systems. Thus the blind user is provided with a position receiver and with a palm computer with an appropriate earphone. At the beginning of the route the user communicates the destination to a central computer, which then follows the movements of the person in real time, acquiring the necessary data by satellite. At the appropriate time, the central computer sends instructions to change street to the users palm device, which then arrives to the blind person by telephone, by means of a voice synthesiser. Therefore, it is easy to understand that such a system substantially replicates the functioning of an automotive-type navigator.

However, in order to operate efficiently, such system requires an adequate precision of the position detecting system, as well as a very frequent or continuous connection between the palm device and the central computer to follow the user step by step.

The NOPPA system of the VTT is also known, described for example in the publication of Are Virtanen and Sami Koskinen, "Towards Seamless Navigation", in Proceedings of the MobileVenu' 04. 27-28.5.2004 Athens, Greece, p. 6. It also uses a system with GPS positioning on a mobile terminal, such mobile terminal locally housing a map of the area in which the user moves.

A similarly functioning but more complex system is the system known as SWAN (http: //sonify.psych.gatech.edu/research/swan/index.htm 1), which includes various components including a laptop computer, various sensors of different types, a GPS system, a compass and pedometer, as well as bone conduction headphones, all enclosed in a backpack. The disadvantages of a system involving such a high number of components, which must be transported by the user, are evident.

Therefore, the above-listed systems have the common inconvenience of being replicates of automobile navigation systems; therefore, in their transposition to use in pedestrian navigation, they require a highly precise positioning system and periodic position detection to be able to give route instructions to the user. Furthermore, the route instructions provided to the user on the basis of positional information must often be strictly followed by the user, as is the case with an automobile navigation system, without him being aware of his own position. Thus such systems do not allow the blind user to use the navigation system only to aid his own movement capacity, retaining decisional autonomy and exploiting residual orientation capacities, coming from various information sources (tactile, acoustic or even olfactory), which are usually maintained by blind users, and, naturally even more so, by visually impaired users.

Document US-A-5 470 233 discloses a process for aiding the pedestrian navigation of visually impaired and blind users according to the preamble of the annexed claim 1.

The present invention has the purpose of solving the above-mentioned inconveniences and proposing a more simple solution, allowing the user to orient in the territory in a semi-autonomous manner, being aware of his position while executing a route.

According to the present invention, such object is achieved by means of a process having the features recalled in the annexed claims, that form an integral part of the technical teaching relative to the invention. The present invention also relates to a corresponding system, as well as to a corresponding computer program product directly loadable in the memory of a computer and susceptible of actuating the steps of a process according to the invention when the computer program product is run on a computer.

The invention will now be described, by way of non-limiting example, with reference to the enclosed figures of drawings, wherein:
- Figure 1 shows a schematic diagram of a system according to the invention;
- Figure 2 shows a diagram illustrating the functioning of the process according to the invention;
- Figure 3 shows a detail of the system shown in Figure 1;
- Figure 4 shows a diagram illustrating an operation of the process shown in Figure 2.

In brief, a process for aid to navigation and orientation on pedestrian routes is proposed that provides for the reception of information regarding the position of the user from a positioning system, in particular a satellite positioning system, by means of a mobile terminal associated with the user. Such positional information is sent by means of the mobile telephone network from the user terminal to a remote computer server, on which is hosted a database containing map information relative to the area in which the user is navigating, containing information corresponding to the geographic position expressed in terms of toponymy information, itself including toponyms and corresponding civic numbers. The remote server verifies the position, executing a correcting and approaching algorithm simulating a movement of the user in different directions, verifying the civic numbers that are encountered in such directions. Also at the remote server, based on a weighting of the civic number in function of the distance, the positional information is transformed into a message indicating the toponymy information, which is transferred to the mobile terminal for reproduction preferably by means of text-to-speech conversion algorithms, that is, of text-voice conversion.

According to an additional aspect of the invention, it is provided for the generating and transferring to the mobile terminal of a guide route for reaching a destination, generated based on such toponymy information and by means of a route search and construction process that evaluates a degree of pedestrian travel difficulty criterion, based at least on the number of crossings associated with such route.

According to an additional aspect of the invention, by means of the mobile terminal, the user can send his own position thusly determined in terms of toponymy information to an aid centre (call centre) that can be of aid in calculating a desired route, searching for points of interest and guiding the user on the telephone.

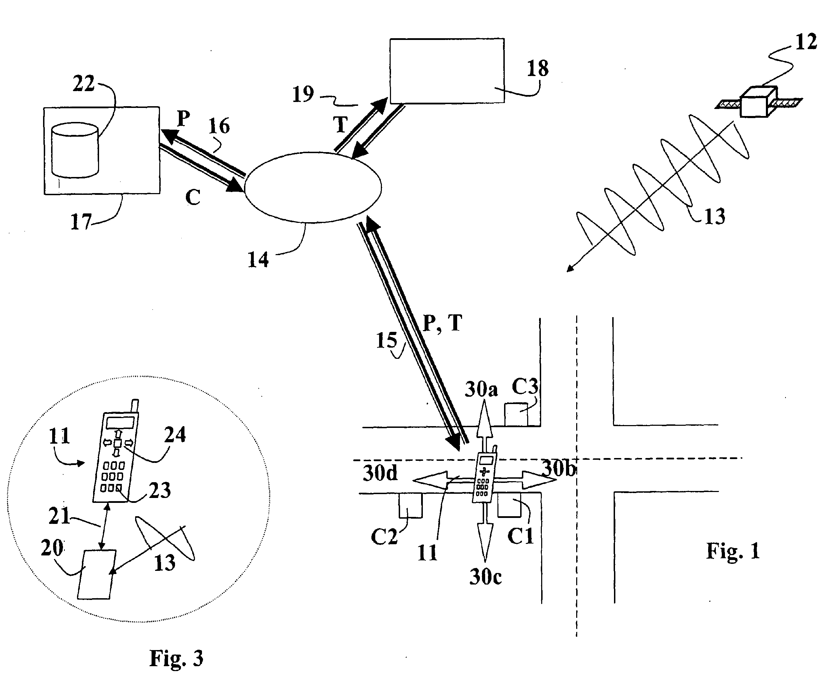

Thus Figure 1 represents a schematic diagram of a system according to the invention. In such system, reference 11 indicates a mobile terminal, associated with a visually impaired or blind user. Such mobile terminal 11 can behave as a mobile telephone, interfacing by means of a mobile connection 15 with a mobile telecommunication network 14, for example a GSM network, as well as operating as a GPS positioner receiving GPS signals 13 from a satellite constellation 12 and processing such GPS signals 13 according to known techniques with the aim of establishing a position P of the user at a certain point in time. The mobile terminal 11 further includes, preferably, audio headphones and a text-to-speech conversion module susceptible of converting text messages received on the mobile connection 15 into voice, in particular SMS messages (Short Message System).

Such mobile terminal 11, illustrated in greater detail in Figure 3, is preferably a cellular telephone, using a Symbian OS or Windows 5 operating system, communicating with a GPS receiving module 20 by means of a Bluetooth connection 21. The mobile terminal 11 also hosts an application software for the calculation of the position P on the basis of the GPS signals 13 which it receives, and the previously-mentioned text-to-speech application software. According to a preferred version of the invention, the mobile terminal 11 is a Nokia Series 60 mobile cellular also implementing an additional screen reading software application, that is, a voice reading of the screen for the blind. Naturally, it is possible alternatively to use mobile terminals wherein the GPS receiver module is directly integrated into the telephone terminal body. The mobile terminal 11 includes a numeric keyboard 24 and a navigation keyboard 23, including arrows in the four directions and a enter key. Such type of keyboard is widely used in mobile terminals on the market, in particular for navigating in the command and configuration menus, and therefore does not require further description.

The system according to the invention also includes a computer server 17 configured to communicate by means of a corresponding connection 16, mobile or fixed, on the mobile telecommunication network 14. Such computer server 17 houses a database 22 containing cartographic information relative to the urban area wherein the user to whom the mobile terminal 11 is associated is navigating.

The system according to the invention also includes a help centre 18, reachable by means of a corresponding mobile connection 19 on the mobile telecommunication network 14. Preferably present in such help centre 18 are operators trained to interact with blind and visually impaired users. In general, reference will be made to human operators, although in the present context such term defines also artificial operators, such as automatic response systems possibly governed by computers.

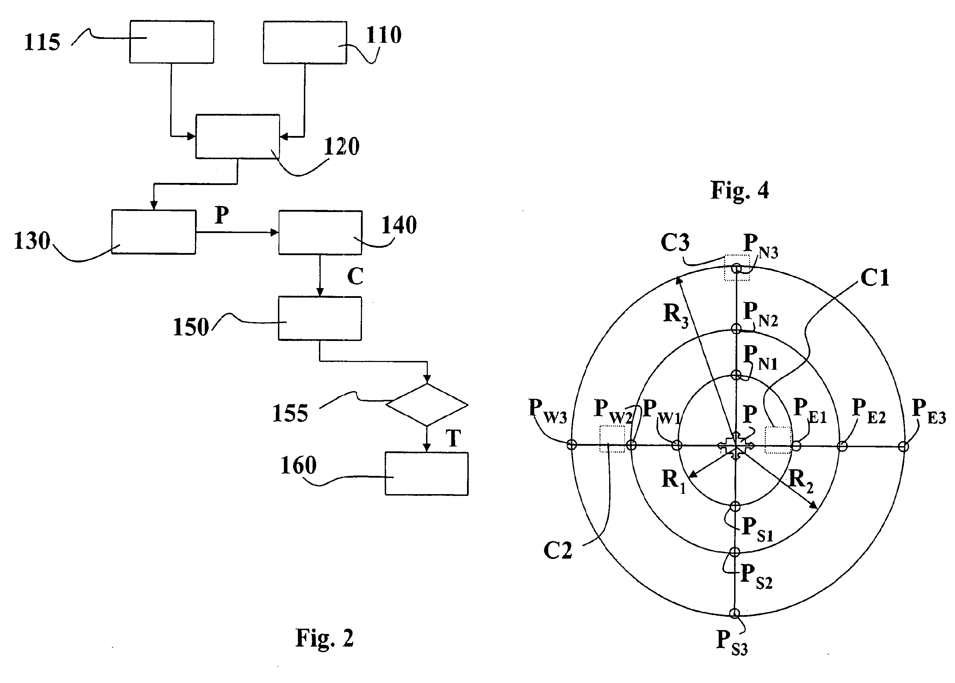

Figure 2 shows a representative diagram of the operation of the system in figure 1.

Reference 110 depicts a position request operation sent by the user. The user commands the execution of such operation 110, for example by pushing the arrow pointing downward on the navigation keyboard 24, which executes a position detection operation 120 at the mobile terminal 11, receiving the GPS signals 13 coming from the satellite constellation 12 and processing them according to known procedures.

Such position detection operation 120 can also be executed following a help request operation 115 executed by the user, for example by pushing the arrow pointing upward on the navigation keyboard 24.

Successive to the position detection operation 120, the mobile terminal 11, in a step 130, provides for sending the calculated position P to the server 17 by means of connections 15 and 16 and the mobile telecommunication network 14. The position P is preferably sent in the form of an SMS message, even if such position P can alternatively be sent by means of the Internet network if the mobile connection is of the GPRS type.

In a successive step 140, the server 17 receives the message containing the positional information P and employs such positional information P as access key to the database 22 containing the cartographic information relative to the area wherein the user is found. Such cartographic information, by way of example, is a Navteq/TeleAtlas navigation map. By means of the interaction with the database 22 the server 17 then identifies the position P on the map, actuates a correction and approaching procedure and simulates user movement in the four directions associated with the compass points, based on the direction detected by the magnetic compass of the GPS system, at three different distances respectively of 3, 7 and 10 meters. In this phase the civic numbers falling in such directions and distances are identified, and, based on their weights, toponymy information C is selected and generated, at least in function of the distance at which the civic number is found, and sent to the mobile terminal 11 by means of the mobile telecommunication network 14.

Therefore, the database 22 contains a map of one or more zones, which includes toponymy information C associated with the position P that is structured, for example, as two-field information: a first field indicates a toponym TP, that is the name of the street (or of the square, avenue), while a second field indicates the civic number corresponding to or closest to the position P provided as access key to the database 22, and therefore it is information on the civic number NC.

As was said, applications housed on the server 17 query the database 22 using the position information P as access key and actuate a so-called reverse-geocoding operation, that is, retrieving information, specifically addresses, in terms of the toponyms TP and civic numbers NC, associated with the GPS geographic coordinates contained in the position information P. In a first phase, a first attempt toponymy information C1 is returned from such position information P. Such first attempt toponymy information C1 can correspond exactly to a toponym-civic number coordinate next to the point indicated by the position information P. Alternatively, due to the GPS system precision being limited to about ten metres, the reverse-geocoding operation may return a first attempt toponymy information C1 containing only a generic indication, for example only the street name. Therefore, in a second phase, starting from the geographic coordinates of the position information P, movement of the user is simulated in four directions 30a, 30b, 30c, 30d, associated, for example with the compass points, each normally relative to a corresponding toponymy TP and civic number NC pair, is performed on the server 17. As was said, such simulation operation is executed several times, simulating movements at different distances, in the example described herein at three different distances, respectively of 3, 7 and 10 metres. Such simulation phase substantially corresponds to accessing the database 22 with a series of coordinates at different distances from the position P. For example, using three distance values and four directions will provide twelve different pieces of positional information around the position P. This is exemplified in the diagram in Figure 4, wherein the positions P_{E1}, P_{E2}, P_{E3 in} direction E, that is, 30b, at three different distances R1, R2, R3 respectively are indicated. In the directions S, W, N respectively there are then pieces of positional information P_{S1}, P_{S2}, P_{S3}, as well as P_{W1}, P_{W2}, P_{W3} and finally P_{N1}, P_{N2}, P_{N3}. For each such piece of positional information, the server 17 will provide toponymy information by means of reverse-geocoding, in some cases the same information C1 found for the position P received by the server 17, in other cases different toponymy information C2, C3, etc.... Weighing the number of times that a certain toponymy information or civic number recurs in the results and the distance at which such toponymy information has been found, or even only on the basis of the distance at which it is found, the toponymy information most likely corresponding to the position P of the user is calculated at the terminal 11 on the basis of the GPS signals 13 and received at the terminal. Note that the simulation phase is executed, preferably, not only if the first attempt toponymy information C1 does not correspond precisely with a toponym TP and civic number NC, but in every case, in order to always verify the quality of such first attempt toponymy information C1. As was mentioned, the simulation preferably occurs in the four directions 30a, 30b, 30c and 30d, which correspond to North, East, South and West, based on the direction that is being taken (signal transmitted by the GPS), defined by an angle measured starting from the direction geographic north. The direction is calculated during the movement and the last direction found in time is taken into consideration.

By way of example, the toponymy information C returned by the server 17 to the terminal 11 could be:
- "Corso Re Umberto no. 57" - in the case of precise identification;
- "Corso Re Umberto near no. 66" - in the case of identification of the position, but not of the precise civic number;
- "Corso Re Umberto near to Via Valeggio no. 20" - in the case in which one finds himself in correspondence with an intersection;
- "Piazza Carducci close to Via Nizza" - in the case in which one finds one's self in a square.

In a step 150, such toponymy information C, arrives at the mobile terminal 11, where it is reproduced for the user through the text-to-voice conversion means and the audio reproduction means of such mobile terminal 11.

At this point the user can consider the information to be sufficient for orienting himself autonomously, possibly moving some meters and repeating the position request operation 110, or operate to receive route information from the server 17 or from the help centre 18 on the basis of the toponymy information C.

Instead, whenever for example, initiation of the process had been determined by a help request 115, step 150 is followed by a ticket creation step 155. The ticket is sent by means of the connection 15, the network 14 and the connection 19 to the help centre 18. The term 'ticket' identifies the request user-side for help and the corresponding assignment of responsibility to a help centre or Call-Centre 18 operator. This allows the system to assign possible new positions successively signalled from the user terminal 11 to the same help centre 18 operator. Such ticket T contains the toponymy information C, which therefore indicates the user's position on the map, in particular applying a direct geo-coding operation. Ultimately, the ticket T includes both the identifying information to couple the user to a determined operator and the information, specifically the toponymy information C, allowing the operator to know the position of the assisted user from the beginning of the assisting operation.

In a step 160 the help centre 18 then process the ticket T, verifies the position of the user on a map analogous to that housed on the server 17 and calls back the user on the mobile terminal 11 to provide assistance. Preferably, the server 17 and the help centre 18 will share the same database 22 or copies of the same database 22. The server 17 and the help centre 18 clearly could also share the same physical location and the help centre 18 could access the server 17 to verify the position of the user.

According to a preferred embodiment it is provided that the help centre 18 or the server 17 send the pedestrian route of the user, instead of by means of an operator, for example by sending a recorded message, and for the user to then process the message locally, listening to it under the desired conditions.

It is also possible to provide for the option of inserting a tracking function, providing for position detection at a predetermined interval of a certain number of minutes and seconds in an automatic and timed way.

Such pedestrian route includes guide or navigational information, which include the crossings, preferably indicating each single crossing traversed by a route. Referring to a representation of the route, as in a graph including arcs that unite the nodes of the graph, the evaluation of each intersection is foreseen, for example intersections between streets, encountered along the arcs of the route being analysed. In this regard, it is foreseen to indicate whether an intersection is a pedestrian crossing or a street intersection. It is also foreseen to describe street elements such as roundabouts, on which every single intersection leg is indicated, and a number is given to indicate which leg of the roundabout to follow to continue along the route.

In addition to the possibility of providing information on the crossings in providing navigation information for a pedestrian route, according to an additional aspect of the invention it is foreseen to calculate the pedestrian route itself towards a determined destination, starting for example from the point identified by the toponymy information, by means of a route construction and search criterion based on a pedestrian criterion, verifying, for example for each arc, the travelling difficulty using a system of "rank" and weights used during the phase of heuristic analysis of the different possible routes. Such heuristic phase can employ the algorithm A*, an algorithm for route searching and construction on graphs that identifies a route from a given initial node toward a given goal node (or passing a given test goal), using an heuristic estimate that classifies every node by means of an estimate of the best route passing through such node and visits the node based on such heuristic estimate. The algorithm A* is also an example of best-first searching. The Dijkstra algorithm can also be used. The best route from the point of view of the travelling difficulty (instead of the distance or the shortest passage time as in the known navigators) is evaluated based on the weight of parameters such as the number of crossings. For example, a cost, expressed by the number of crossings, can be associated to each arc of the graph. In addition, the criterion can be evaluated also based on the number of changes in direction (turns) and/or the length of the route. Such route calculation process is based on several processing cycles, performed for example at the server or at the help centre, for the purpose of calculating the optimal route from the standpoint of travelling difficulty for a blind person. The insertion of additional information at the map level is also foreseen, such as the presence of traffic lights and/or crosswalks and such factors will also be taken into consideration in the route calculation phase for the purpose of calculating the best route from the pedestrian point of view.

According to an additional aspect of the solution according to the invention, it is foreseen that guide indications be provided by indicating the angle of approach to the destination in hour format instead of indicating it in degrees/direction, for example when approaching a destination and/or a point of interest (POI). For example, the indication could recite 'at 3 o'clock house distance 300 metres'.

Therefore, the system and the process described here above advantageously allow the user to orient himself autonomously on the territory, being aware of his own position while travelling, in the moment in which he desires.

Advantageously the process and system according to the invention are set up not only for simple navigation, with rigid guidance of the user, but for orientation, since for each operation the process is based on the detection of toponymy or address information, intended both as civic number and approximation of the position. This advantageously allows the use of positioning systems such as the GPS system, with a precision of tens of meters without having to resort to more precise systems such as the EGNOS system.

The inclusion of a remote help service, the so-called call-centre, able to see the position of the user on the map and at the same time be updated on route interruptions, traffic abnormalities, meteorology and other useful information, advantageously allows communication with a blind user, guiding and warning about possible inconveniences and dangers. If needed, the help centre could also call the police, ambulances or other services, reporting the position where to intervene.

During the conversation between the user and the help centre the user can advantageously verify his position continuously and communicate it so that the help centre can best guide him toward his destination.

The help centre has the possibility of sending also an SMS to previously configured numbers, and verify the profile of the user that made the request (possible physical problems, or other annotations).

The user has the possibility of indicating his own reference/note to be used in place of the detected toponymy information.

Consequently, without prejudice to the underlying principle of the invention, the details of realisation and the embodiments may vary, even appreciably, with reference to what has been described and illustrated, by way of non-limiting example only, without departing from the scope of the invention, as defined by the following claims.

While, it is clear that the server is preferably arranged remotely, the database and the cartographic information could also be integrated in a memory, fixed or removable, of the mobile terminal.

Furthermore, the positioning satellite system could be different from the GPS system, for example the mentioned EGNOS system could be adopted. The telecommunication network used by the mobile terminal could be of cellular type (GPS, GPRS, UMTS), but also a wireless mobile network of another type, operating for example in connection with Bluetooth Hotspot, W-LAN or with other wireless protocols, for example to access the Internet. Finally, it is clear that the solution applies mainly to urban contexts, but in general it can be extended to all contexts in which it is possible to express guide information such as toponymy information including one or more toponyms or one or more civic numbers associated with said one or more toponyms, such guide information having been obtained through detection of a user position by means of a positioning satellite system at a user-portable processing terminal, transferring said user position to a guide information processing module, transferring in response from said guide information processing module to said portable processing device at least one guide information obtained based on said position of the user.

According to an additional aspect of the proposed solution, it is envisaged to provide a local description of a map in non-graphic mode, for the purpose of allowing the blind user to listen and virtually touch the map so to discover its details. By way of example, scrolling of the map is envisaged using the four direction arrows on the navigation keyboard 23 to obtain information on both the civic numbers and the names of the streets encountered moving in a given direction, followed by audio reproduction of such numbers and names together with their relative distance from the start point, for example by means of text-to-speech conversion. In addition, it is possible to have information on points of potential interest that can be encountered in the vicinity.

According to another aspect of the solution, a download function for graphic maps for the blind is provided. The system envisages the possibility of visualising graphic maps for visually impaired users, for example, those who can see and distinguish shapes, possibly with visual aids.

For the purpose of downloading only the necessary information, the local management of maps is carried out using a network traffic optimisation algorithm based on "Progressive Download" logic, making map information locally available on request in function of use. In this way a user that repeatedly uses the system in the same geographic area can download from time to time a smaller amount of information from the network, in this way saving on the GPRS/UMTS traffic costs.

## Claims

1. A process for aiding the pedestrian navigation of visually impaired and blind users, which includes the operation of detecting the position of the user (P) at a user-portable processing terminal (11) by means of a positioning satellite system (12), of transferring (15, 16) said user position (P) to a guide information processing module (17), of transferring in response at least one guide information (C) obtained based on said user position (P) from said guide information processing module (17) to said portable processing terminal (11), wherein said at least one guide information (C) includes toponymy information including one or more toponyms (TP) and one or more civic numbers (NC) associated with said one or more toponyms (TP) and that said process includes the generation and transferring to said portable processing terminal (11) of a guide route toward a destination generated based on said toponymy information (C) and by means of a route search and construction process evaluating a difficulty of pedestrian travel criterion **characterised in that** said criterion is based at least on the number of crossings associated with the route, and **in that** includes obtaining (140) said toponymy information (C) accessing a database (22) included in said one guide information processing module (17), based on said user position (P) by means of a reverse-geocoding operation, said operation of obtaining (140) said toponymy information (C) further comprising the steps of:
generating a plurality of simulated position information (P_{E1}, P_{E2}, P_{E3} P_{S1}, P_{S2}, P_{S3}, P_{W1}, P_{W2}, P_{W3}, P_{N1}, P_{N2}, P_{N3}) corresponding to one or more directions (30a, 30b, 30c, 30d) and to one or more distances (R1, R2, R3),
obtaining corresponding toponymy information by means of said reverse-geocoding operation,
selecting the most probable toponymy information (C) to transfer to said user-portable processing terminal (11) by weighing, at least in function of distance, said corresponding toponymy information obtained.

2. The process according to claim 1, **characterised in that** said step of generating a plurality of simulated position information (P_{E1}, P_{E2}, P_{E3} P_{S1}, P_{S2}, P_{S3}, P_{W1}, P_{W2}, P_{W3}, P_{N1}, P_{N2}, P_{N3}) is executed depending on the content of a first tentative toponymy information (C1) initially obtained on the basis of said single position (P) obtained from the positioning means (12).

3. The process according to one or more of the previous claims, **characterised in that** said operation of detecting (120) the user position (P) at said user-portable processing terminal (11) by means of a positioning system (12) is executed following an operation of requesting (110, 115) said user position (P).

4. The process according to one or more of the previous claims, **characterised in that** said operation of requesting (115) said user position (P) includes an operation of requesting help from a help centre (18) and it also includes calling (155) the help centre (18) from the user-portable processing terminal (11) upon reception of said toponymy information (C), said operation of calling (155) including the steps of:
creating a ticket (T) including at least said toponymy information (C), transferring (15, 19) to said help centre (18) said ticket (T) by means of a telecommunication network (14), processing said ticket (T) at the help centre (18) and calling the user on said user-portable processing terminal (11) to provide assistance.

5. The process according to claim 4, **characterised in that** said ticket (T) includes identification information for coupling the user-portable processing terminal (11) with an operator of the help centre (18).

6. The process according to one or more of the previous claims, **characterised in that** said operation of generating and transferring a guide route toward a destination to said portable processing terminal (11) includes extracting said toponymy information (C) from said module (17) or from said help centre (18) and verifying the position of the user by means of a direct geocoding operation.

7. The process according to one or more of the previous claims, **characterised in that** said operation of transferring (15, 16) said user position (P) to a guide information processing module (17) occurs by means of a telecommunication network (14), in particular of the mobile or wireless type.

8. The process according to one or more of the previous claims, **characterised in that** said operation of transferring from said guide information processing module (17) to said portable processing device (11) at least one toponymy information (C) obtained based on said user position (P) includes transferring said at least one toponymy information (C) and/or said route by means of a text message, in particular an SMS (Short Message System) message and performing a text voice conversion at the user-portable terminal (11).

9. The process according to one or more of the previous claims, **characterised in that** said process of route searching and construction evaluates said pedestrian travelling difficulty criterion based also on a number of changes in direction and/or on route length.

10. The process according to one or more of the previous claims, **characterised in that** said operation of detecting (120) the position (P) is executed, in an automatic and timed way at a prefixed interval of a certain number of minutes and seconds.

11. A system for the aid to navigation, in particular pedestrian navigation, of users, in particular visually impaired and blind users, which includes a user-portable processing terminal (11) configured to detect the position of the user (P) by means of a positioning satellite system (12) and configured to transfer (15, 16) said user position (P) to a guide information processing module (17), said guide information processing module (17) being configured to transfer in response to said portable processing terminal (11) at least one guide information (C) obtained based on said user position (P), **characterised in that** said system is configured to execute the operations according to one or more of the claims from 1 to 11.

12. The system according to the previous claim, **characterised in that** said guide information processing module (17) is included on a computer server remotely located or it is associated with said portable processing device (11).

13. A computer program product directly loadable in the memory of a computer and including portions of software code to actuate the phases of the process according to the claims from 1 to 11.

## Patentansprüche

1. Prozess, mit dem die Fußgänger-Navigation von sehbehinderten und blinden Benutzern unterstützt wird, wobei der Prozess den Vorgang des Erfassens der Position des Benutzers (P) an einem vom Benutzer tragbaren Verarbeitungs-Endgerät (11) mittels eines Positionierungs-Satellitensystems (12), des Übertragens (15,16) der Benutzerposition (P) zu einem Führungsinformations-Verarbeitungsmodul (17), des Übertragens wenigstens einer Führungsinformation (C), die auf Basis der Benutzerposition (P) gewonnen wird, von dem Führungsinformations-Verarbeitungsmodul (17) zu dem tragbaren Verarbeitungs-Endgerät (11) in Reaktion darauf umfasst, wobei die wenigstens eine Führungsinformation (C) Ortsnamen-Informationen enthält, die einen oder mehrere Ortsnamen (TP) sowie eine oder mehrere Hausnummer/n (NC) enthalten, die mit dem einen oder den mehreren Ortsnamen (TP) verbunden sind, und dass der Prozess die Erzeugung und Übertragung zu dem tragbaren Verarbeitungs-Endgerät (11) einer Führungsroute zu einem Ziel, die auf Basis der Ortsnamen-Informationen (C) und mittels eines Routen-Such-und-Erstellungs-Prozesses erzeugt wird, mit dem ein Kriterium der Schwierigkeit der Fortbewegung für Fußgänger bewertet wird, **dadurch gekennzeichnet, dass** das Kriterium wenigstens auf der Anzahl mit der Route verbundener Kreuzungen basiert und dass der Prozess das Gewinnen (140) der Ortsnamen-Informationen (C) mittels Zugriff auf eine Datenbank (22), die in dem einen Führungsinformations-Verarbeitungsmodul (17) enthalten ist, auf Basis der Benutzerposition (P) mittels eines Reverse-Geocoding-Vorgangs einschließt, wobei der Vorgang des Gewinnens (140) der Ortsnamen-Informationen (C) des Weiteren die folgenden Schritte umfasst:
Erzeugen einer Vielzahl simulierter Positionsinformationen (P_{E1}, P_{E2}, P_{E3}, P_{S1}, P_{S2}, P_{S3}, P_{W1}, P_{W2}, P_{W3}, P_{N1}, P_{N2}, P_{N3}), die einer oder mehreren Richtung/en (30a, 30b, 30c, 30d) und einer oder mehreren Distanzlen (R₁, R₂, R₃) entsprechen,
Gewinnen entsprechender Ortsnamen-Informationen mittels des Reverse-Geocoding-Vorgangs,
Auswählen der wahrscheinlichsten Ortsnamen-Information (C) zum Übertragen zu dem vom Benutzer tragbaren Verarbeitungs-Endgerät (11) durch Gewichten der entsprechenden gewonnenen Ortsnamen-Informationen wenigstens in Abhängigkeit von der Entfernung.

2. Prozess nach Anspruch 1, **dadurch gekennzeichnet, dass** die Schritte des Erzeugens einer Vielzahl simulierter Positionsinformationen (P_{E1}, P_{E2}, P_{E3}, P_{S1}, P_{S2}, P_{S3}, P_{W1}, P_{W2}, P_{W3}, P_{N1}, P_{N2}, P_{N3}) in Abhängigkeit von dem Inhalt einer ersten vorläufigen Ortsnamen-Information (C1) ausgeführt wird, die anfänglich auf Basis der von der Positionier-Einrichtung (12) gewonnenen einzelnen Position (P) gewonnen wird.

3. Prozess nach einem oder mehreren der vorangehenden Ansprüche, **dadurch gekennzeichnet, dass** der Vorgang des Erfassens (120) der Benutzerposition (P) an dem vom Benutzer tragbaren Verarbeitungs-Endgerät (11) mittels eines Positionierungs-Systems (12) auf einen Vorgang des Anforderns (110, 115) der Benutzerposition (P) folgend ausgeführt wird.

4. Prozess nach einem oder mehreren der vorangehenden Ansprüche, **dadurch gekennzeichnet, dass** der Vorgang des Anforderns (115) der Benutzerposition (P) einen Vorgang des Anforderns von Hilfe von einem Hilfe-Zentrum (18) einschließt und er des Weiteren einschließt, dass das Hilfe-Zentrum (18) beim Empfang der Ortsnamen-Informationen (C) von dem vom Benutzer tragbaren Verarbeitungs-Endgerät (11) gerufen wird (155), wobei der Vorgang des Rufens (155) die folgenden Schritte einschließt:
Erzeugen eines Tickets (T), das wenigstens die Ortsnamen-Informationen (C) enthält, Übertragen (15,19) des Tickets (T) mittels eines Telekommunikationsnetzes (14) zu dem Hilfe-Zentrum (18), Verarbeiten des Tickets (T) an dem Hilfe-Zentrum (18) und Rufen des Benutzers auf dem vom Benutzer tragbaren Verarbeitungs-Endgerät (11), um Unterstützung bereitzustellen.

5. Prozess nach Anspruch 4, **dadurch gekennzeichnet, dass** das Ticket (T) Identifizierungs-Informationen zum Verbinden des vom Benutzer tragbaren Verarbeitungs-Endgeräts (11) mit einer Bedienungsperson des Hilfe-Zentrums (18) enthält.

6. Prozess nach einem oder mehreren der vorangehenden Ansprüche, **dadurch gekennzeichnet, dass** der Vorgang des Erzeugens und Übertragens einer Führungsroute zu einem Ziel zu dem tragbaren Verarbeitungs-Endgerät (11) einschließt, dass die Ortsnamen-Informationen (C) von dem Modul (17) oder von dem Hilfe-Zentrum (18) extrahiert werden und die Position des Benutzers mittels eines Direct-Geocoding-Vorgangs verifiziert wird.

7. Prozess nach einem oder mehreren der vorangehenden Ansprüche, **dadurch gekennzeichnet, dass** der Vorgang des Übertragens (15,16) der Benutzerposition (P) zu einem Führungsinformations-Verarbeitungsmodul (17) mittels eines Telekommunikationsnetzes (14), insbesondere vom Mobil- oder Drahtlos-Typ, stattfindet.

8. Prozess nach einem oder mehreren der vorangehenden Ansprüche, **dadurch gekennzeichnet, dass** der Vorgang des Übertragens wenigstens einer Ortsnamen-Information (C), die auf Basis der Benutzerposition (P) gewonnen wird, von dem Führungsinformations-Verarbeitungsmodul (17) zu der tragbaren Verarbeitungsvorrichtung (11) einschließt, dass die wenigstens eine Ortsnamen-Information (C) und/oder die Route mittels einer Textnachricht, insbesondere einer SMS-Nachricht, übertragen wird und eine Text-Sprach-Umwandlung an dem vom Benutzer tragbaren Endgerät (11) durchgeführt wird.

9. Prozess nach einem oder mehreren der vorangehenden Ansprüche, **dadurch gekennzeichnet, dass** der Prozess des Suchens und Erstellens einer Route das Kriterium der Schwierigkeit der Fortbewegung für Fußgänger auch auf Basis einer Anzahl von Richtungsänderungen und/oder der Länge der Route bewertet.

10. Prozess nach einem oder mehreren der vorangehenden Ansprüche, **dadurch gekennzeichnet, dass** der Vorgang des Erfassens (120) der Position (P) automatisch und zeitgesteuert in einem im Voraus festgelegten Intervall einer bestimmten Anzahl von Minuten und Sekunden ausgeführt wird.

11. System für die Unterstützung von Navigation, insbesondere Fußgänger-Navigation, von Benutzern, insbesondere sehbehinderten und blinden Benutzern, das ein vom Benutzer tragbares Verarbeitungs-Endgerät (11) enthält, das so konfiguriert ist, dass es die Position des Benutzers (P) mittels eines Positionierungs-Satellitensystems (12) erfasst, und so konfiguriert ist, dass es die Benutzerposition (P) zu einem Führungsinformations-Verarbeitungsmodul (17) überträgt (15,16), wobei das Führungsinformations-Verarbeitungsmodul (17) so konfiguriert ist, dass es in Reaktion darauf wenigstens eine Führungsinformation (C), die auf Basis der Benutzerposition (P) gewonnen wird, zu dem tragbaren Verarbeitungs-Endgerät (11) überträgt, **dadurch gekennzeichnet, dass** das System so konfiguriert ist, dass es die Vorgänge nach einem oder mehreren der Ansprüche 1 bis 11 ausführt.

12. System nach dem vorangehenden Anspruch, **dadurch gekennzeichnet, dass** das Führungsinformations-Verarbeitungsmodul (17) in einem Computer-Server enthalten ist, der entfernt angeordnet ist, oder dass es mit der tragbaren Verarbeitungsvorrichtung (11) verbunden ist.

13. Computerprogramm-Erzeugnis, das direkt in den Speicher eines Computers geladen werden kann und Abschnitte von Soffiivare-Code enthält, durch die die Phasen des Prozesses nach den Ansprüchen 1 bis 11 ausgelöst werden.

## Revendications

1. Procédé d'aide à la navigation pédestre d'utilisateurs non voyants ou mal voyants, lequel comprend les étapes consistant à détecter la position de l'utilisateur (P) au niveau d'un terminal de traitement portable de l'utilisateur (11) au moyen d'un système satellitaire de positionnement (12), à transférer (15, 16) ladite position d'utilisateur (P) vers un module de traitement d'informations de guidage (17), à transférer, en réponse, au moins une information de guidage (C) obtenue sur la base de ladite position d'utilisateur (P), dudit module de traitement d'informations de guidage (17) audit terminal de traitement portable (11), dans lequel ladite au moins une information de guidage (C) comprend des informations toponymiques incluant un ou plusieurs toponymes (TP) et un ou plusieurs numéros de voirie (NC) associés audit un ou auxdits plusieurs toponymes (TP), et **caractérisé en ce que** ledit procédé inclut l'étape de génération et de transfert, audit terminal de traitement portable (11), d'un itinéraire de guidage vers une destination générée sur la base desdites informations toponymiques (C), et, au moyen d'un processus de recherche et de construction d'itinéraire, l'étape consistant à évaluer un critère de difficulté de déplacement pédestre, **caractérisé en ce que** ledit critère est basé au moins sur le nombre de croisements associés à l'itinéraire, et **en ce qu'**il comprend l'étape consistant à obtenir (140) lesdites informations toponymiques (C) en accédant à une base de données (22) incluse dans ledit module de traitement d'informations de guidage (17), sur la base de ladite position d'utilisateur (P), au moyen d'une opération de géocodage inversé, ladite étape d'obtention (140) desdites informations toponymiques (C) comprenant en outre les étapes ci-dessous consistant à :
générer une pluralité d'informations de positions simulées (P_{E1}, P_{E2}, P_{E3}, P_{S1}, P_{S2}, P_{S3}, P_{W1}, P_{W2}, P_{W3}, P_{N1}, P_{N2}, P_{N3}) correspondant à une ou plusieurs directions (30a, 30b, 30c, 30d) et à une ou plusieurs distances (R1, R2, R3) ;
obtenir des informations toponymiques correspondantes au moyen de ladite opération de géocodage inversé ;
sélectionner les informations toponymiques les plus probables (C) en vue de leur transfert audit terminal de traitement portable de l'utilisateur (11) en pondérant, au moins en fonction de la distance, lesdites informations toponymiques correspondantes obtenues.

2. Procédé selon la revendication 1, **caractérisé en ce que** ladite étape de génération d'une pluralité d'informations de positionnement simulé (P_{E1}, P_{E2}, P_{E3}, P_{S1}, P_{S2}, P_{S3}, P_{W1}, P_{W2}, P_{W3}, P_{N1}, P_{N2}, P_{N3}) est mise en oeuvre en fonction du contenu des informations toponymiques d'une première tentative (C1), initialement obtenues sur la base de ladite position unique (P) obtenue à partir du moyen de positionnement (12).

3. Procédé selon l'une ou plusieurs des revendications précédentes, **caractérisé en ce que** ladite étape de détection (120) de la position d'utilisateur (P), au niveau dudit terminal de traitement portable d'utilisateur (11), au moyen d'un système de positionnement (12), est mise en oeuvre à l'issue d'une étape de demande (110, 115) de ladite position d'utilisateur (P).

4. Procédé selon l'une ou plusieurs des revendications précédentes, **caractérisé en ce que** ladite étape de demande (115) de ladite position d'utilisateur (P) comprend une étape consistant à demander l'assistance d'un centre d'assistance (18) et également à appeler (155) le centre d'assistance (18) à partir du terminal de traitement portable de l'utilisateur (11) lors de la réception desdites informations toponymiques (C), ladite étape d'appel (155) comportant les étapes ci-dessous consistant à :
créer un ticket (T) comportant au moins lesdites informations toponymiques (C), transférer (15, 19) audit centre d'assistance (18) ledit ticket (T), au moyen d'un réseau de télécommunication (14), traiter ledit ticket (T) au niveau du centre d'assistance (18) et appeler l'utilisateur sur ledit terminal de traitement portable de l'utilisateur (11) en vue de lui fournir une assistance.

5. Procédé selon la revendication 4, **caractérisé en ce que** ledit ticket (T) comprend des informations d'identification permettant de connecter le terminal de traitement portable d'utilisateur (11) à un opérateur du centre d'assistance (18).

6. Procédé selon l'une ou plusieurs des revendications précédentes, **caractérisé en ce que** ladite étape de génération et de transfert d'un itinéraire de guidage, vers une destination, audit terminal de traitement portable (11) comprend l'étape consistant à extraire lesdites informations toponymiques (C) dudit module (17) ou dudit centre d'assistance (18) et l'étape consistant à vérifier la position de l'utilisateur au moyen d'une opération de géocodage direct.

7. Procédé selon l'une ou plusieurs des revendications précédentes, **caractérisé en ce que** ladite étape de transfert (15, 16) de ladite position d'utilisateur (P) à un module de traitement d'informations de guidage (17) est réalisée au moyen d'un réseau de télécommunication (14), en particulier de type mobile ou sans fil.

8. Procédé selon l'une ou plusieurs des revendications précédentes, **caractérisé en ce que** ladite étape de transfert, dudit module de traitement d'informations de guidage (17) audit dispositif de traitement portable (11), d'au moins une information toponymique (C) obtenue sur la base de ladite position d'utilisateur (P), comporte l'étape consistant à transférer ladite au moins une information toponymique (C) et/ou ledit itinéraire au moyen d'un message texte, en particulier d'un message SMS (service de messages courts) et l'étape consistant à mettre en oeuvre une conversion voix / texte au niveau du terminal portable de l'utilisateur (11).

9. Procédé selon l'une ou plusieurs des revendications précédentes, **caractérisé en ce que** ledit processus de recherche et de construction d'itinéraire évalue ledit critère de difficulté de déplacement pédestre également sur la base d'un nombre de changements de direction et/ou d'une longueur d'itinéraire.

10. Procédé selon l'une ou plusieurs des revendications précédentes, **caractérisé en ce que** ladite étape de détection (120) de la position (P) est mise en oeuvre, de manière automatique et chronométrée, à un intervalle prédéfini comptant un nombre de minutes et de secondes.

11. Système d'aide à la navigation, en particulier à la navigation pédestre, des utilisateurs, en particulier des utilisateurs non voyants ou mal voyants, lequel comporte un terminal de traitement portable de l'utilisateur (11), configuré de manière à détecter la position de l'utilisateur (P) au moyen d'un système satellitaire de positionnement (12), et configuré de manière à transférer (15, 16) ladite position d'utilisateur (P) à un module de traitement d'informations de guidage (17), ledit module de traitement d'informations de guidage (17) étant configuré de manière à transférer, en réponse, audit terminal de traitement portable (11), au moins une information de guidage (C) obtenue sur la base de ladite position d'utilisateur (P), **caractérisé en ce que** ledit système est configuré de manière à exécuter les étapes selon l'une ou plusieurs des revendications 1 à 11.

12. Système selon la revendication précédente, **caractérisé en ce que** ledit module de traitement d'informations de guidage (17) est inclus dans un serveur informatique situé à distance ou est associé audit dispositif de traitement portable (11).

13. Produit-programme informatique pouvant être directement chargé dans la mémoire d'un ordinateur, et incluant des parties de code logiciel destinées à mettre en oeuvre les différentes étapes du procédé selon l'une quelconque des revendications 1 à 11.
